# EUROPÄISCHE PATENTSCHRIFT

(11) **EP 3 009 339 B1**
(45) Veröffentlichungstag und Bekanntmachung des Hinweises auf die Patenterteilung: **09.09.2020**
(21) Anmeldenummer: 15002885.0
(22) Anmeldetag: 09.10.2015
(51) Int. Cl.: B62M 9/10

(54) **MEHRFACH-KETTENRADANORDNUNG FÜR EINE HINTERRADNABE**
MULTIPLE CHAIN WHEEL ASSEMBLY FOR A REAR WHEEL HUB
SYSTEME DE ROUE D'ENTRAINEMENT MULTIPLE POUR UN MOYEU DE ROUE ARRIERE

(30) Priorität: 14.10.2014 DE 102014014972; 08.10.2015 DE 102015219522
(43) Veröffentlichungstag der Anmeldung: 20.04.2016
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- EP-A1- 0 444 556
- DE-A1-102014 007 274
- TW-A- 201 404 658
- US-A1- 2003 073 530

## Beschreibung

Die Erfindung betrifft eine Mehrfach-Kettenradanordnung für eine Hinterradnabe eines Fahrrads mit verbesserten Umschalteigenschaften, reduzierten Vibrationen bei Schräglauf und verbessertem Verschleißverhalten Dokument TW201404658 offenbart die Präambel des Anspruchs 1.

In dem Dokument DE 10 2012 023 819 A1 ist ein vorderes Kettenrad zur Anbringung an einer Tretkurbel eines Fahrrads gezeigt, das sich durch eine verbesserte Kettenführung gegenüber konventionellen Kettenrädern auszeichnet. Die verbesserten Führungseigenschaften ermöglichen, dass bei einem Einsatz eines einzigen solchen Kettenrades an einer Tretkurbel eines Fahrrades auf zusätzliche Kettenführungen verzichtet werden kann. Dies gilt auch dann, wenn keine Kettenführung eines Kettenwerfers vorhanden ist. Diese Eigenschaft ist besonders bei solchen Fahrrädern von entscheidendem Vorteil, die im Gelände eingesetzt werden und bei denen infolge von Geländeunebenheiten und bei starken Lenkbewegungen die Kette dazu neigt, vom Kettenrad abzuspringen. Die verbesserten Führungseigenschaften werden vor allem dadurch erreicht, dass das Kettenrad in Achsrichtung der Tretkurbel betrachtet dicke und dünne Zähne aufweist, die in Umfangsrichtung alternierend angeordnet sind.

Weiterhin können diese Zähne in radialer Richtung besonders lang ausgebildet sein, wobei die Zahnlücken gegenüber den aufgenommenen Kettenrollen in Umfangsrichtung nur unbedeutend größer ausgebildet sein können. Außerdem ist es möglich, Freiräume vorzusehen, um den gegenüber den Kettenrollen überstehenden Innenlaschen der Kette Raum zu bieten.

An einer rechten Tretkurbel ist bei diesem Stand der Technik jeweils nur eines dieser Kettenräder angeordnet, so dass auf einen vorderen Kettenwerfer verzichtet werden kann. Somit entfällt die Notwendigkeit, die Antriebs-Rollenkette im Lasttrum auf ein benachbartes Kettenrad umzulegen, was normalerweise infolge der im Lasttrum vorliegenden Kettenzugkräfte hohe Anforderungen stellt. Für den Einsatz an einer Hinterradnabe sind die genannten Kettenräder ungeeignet, weil die außerordentlich guten Kettenführungseigenschaften einem Umlegen auf ein benachbartes Kettenrad entgegenstehen.

Ähnliche Kettenradanordnungen sind auch aus den später veröffentlichten Patentanmeldungen US 2014/0338494 A1 und DE 10 2014 019 528 A1 bekannt.

Die Schaltvorgänge an Mehrfach-Kettenradanordnungen einer Tretkurbel und damit verbundene Anforderungen unterscheiden sich jedoch wesentlich von denen einer Mehrfach-Kettenradanordnung für eine Hinterradnabe eines Fahrrads. Im Falle eines treibenden Kettenrades (an der Tretkurbel) wird die Kettenrolle jeweils von der Lastflanke des Kettenrades aufgenommen. Die Antriebsrichtung gibt vor, dass der Schaltvorgang im Lasttrum erfolgen muss. Bei einem Abtriebskettenrad, beispielsweise einem Ritzel einer an einem Fahrradhinterrad angebrachten Ritzelkassette, läuft die Kettenrolle jeweils auf oder nahe der Einlaufflanke im Leertrum des Antriebes ein. Die Kettenführung erfolgt durch die Schaltwerkszahnrolle, so dass die Einlaufsituation auf das betreffende Kettenrad keinen wesentlichen Schräglauf erfährt. Daraus ergeben sich vollkommen unterschiedliche Aufgabenstellungen für das Schalten und das Führen der Kette für ein hinteres Kettenrad (Ritzel) am Hinterrad eines Fahrrads und ein vorderes Kettenrad an der Tretkurbel.

Eine Aufgabe der vorliegenden Erfindung besteht darin, eine Mehrfach-Kettenradanordnung für eine Hinterradnabe eines Fahrrads bereitzustellen, die verbesserte Umschalteigenschaften aufweist, insbesondere beim Umschalten auf durchmesserkleinere Kettenräder und bei Schaltvorgängen mit großen Zähnezahldifferenzen. Weiterhin sollen die Schräglaufeigenschaften verbessert und der Verschleiß reduziert werden.

Gelöst wird diese Aufgabe durch eine Mehrfach-Kettenradanordnung für eine Hinterradnabe eines Fahrrades mit den Merkmalen des Anspruchs 1.

Bevorzugte Ausführungsformen werden aus den Ansprüchen 2 bis 14 ersichtlich.

Eine Mehrfach-Kettenradanordnung für eine Hinterradnabe eines Fahrrades umfasst eine Vielzahl an Kettenrädern mit unterschiedlichen Durchmessern, die insbesondere jeweils eine geradzahlige Anzahl von Zähnen aufweisen. Dabei ist am Umfang wenigstens eines der Kettenräder wenigstens eine Folge von Zähnen vorgesehen, in der hinsichtlich ihrer Materialstärke in Richtung quer zur Umfangsrichtung betrachtet auf einen dünnen Zahn ein dicker Zahn und darauffolgend wieder ein dünner Zahn angeordnet ist. Das wenigstens eine Kettenrad weist wenigstens eine Passageausnehmung auf, insbesondere in Form einer Einprägung oder einer durch Materialabtrag hergestellten Ausnehmung, die wenigstens eine Schaltgasse bildet und einen Wechsel einer mit einem der Kettenräder in Eingriff stehenden Kette hin zum Eingriff mit einem benachbarten Kettenrad ermöglicht.

Die Schaltgasse kann somit zwischen Zähnen benachbarter Kettenräder als Mittel zur Passage der Kette durch eine Verzahnung an einem Kettenrad mit größerem Durchmesser bzw. größerer Zähnezahl vorgesehen sein, damit die Kette außer Eingriff mit den Zähnen am betrachteten Kettenrad kommen kann und auf das benachbarte Kettenrad mit kleinerem Durchmesser bzw. kleinerer Zähnezahl wechseln kann. Zusätzlich oder alternativ kann auch eine Schaltgasse dazu vorgesehen sein, damit die Kette außer Eingriff mit den Zähnen am betrachteten kleineren Kettenrad kommen kann und auf das benachbarte Kettenrad mit größerem Durchmesser bzw. größerer Zähnezahl wechseln kann.

Gemäß einer Variante kann dabei eine Passageausnehmung an wenigstens einem der Zähne, der einen Passagezahn bildet, eines der Kettenräder mit größerem Durchmesser zur Passage einer Innenlasche der Kette zum Abstieg der Kette auf ein benachbartes Kettenrad mit kleinerem Durchmesser vorgesehen sein. Gemäß einer weiteren Variante kann eine Passageausnehmung an wenigstens einem der Zähne, der einen Passagezahn bildet, eines der Kettenräder mit kleinerem Durchmesser zur Passage einer Innenlasche oder einer Außenlasche der Kette zum Aufstieg der Kette auf ein benachbartes Kettenrad mit größerem Durchmesser vorgesehen sein.

Weiterhin kann die Phasenzuordnung zwischen benachbarten Kettenrädern derart eingerichtet sein, dass eine Synchronität zwischen den Kettengliedern und entsprechenden zugehörigen Zähnen eines Kettenrades mit kleinerem Durchmesser hergestellt wird. Dadurch können die an dem Kettenrad mit kleinerem Durchmesser wieder zum Eingriff kommenden Innenlaschen- oder Außenlaschenglieder auf einen entsprechenden zugehörigen Zahn treffen. So kann sichergestellt werden, dass ein Innenlaschenglied auf einen dünnen Zahn und ein Außenlaschenglied entsprechend auf einen dicken Zahn trifft. Auch hierbei betrifft "dünn" und "dick" die Materialstärke des jeweiligen Zahns in Richtung quer zur Umfangsrichtung des zugehörigen Kettenrads betrachtet, d.h. im Wesentlichen parallel zur Richtung der jeweiligen Drehachse.

Durch die erfindungsgemäße Anordnung kann vorgegeben sein, dass bei einer Verlagerung der Kette von einem größeren Kettenrad auf ein kleineres Kettenrad ein Innenlaschenglied an einem dünnen Zahn des Kettenrads mit größerem Durchmesser seitlich vorbeiläuft ("Innenlaschenpassage"), damit die Kette außer Eingriff mit der Verzahnung des Kettenrads mit größerem Durchmesser gelangt.

Entsprechend kann in einer Weiterbildung der erfindungsgemäßen Mehrfach-Kettenradanordnung wenigstens ein Kettenrad mit kleinerem Durchmesser gegenüber einem benachbarten Kettenrad mit größerem Durchmesser phasenmäßig derart ausgerichtet sein, dass bei einem Wechsel der Kette von dem Kettenrad mit größerem Durchmesser auf das benachbarte Kettenrad mit kleinerem Durchmesser eine Synchronität zwischen den Zähnen des Kettenrads mit kleinerem Durchmesser und jeweils zugehörigen Kettengliedern der Kette erreicht wird. Mit anderen Worten kann das wenigstens eine Kettenrad mit kleinerem Durchmesser gegenüber dem benachbarten Kettenrad mit größerem Durchmesser um einen bestimmten Drehwinkel um eine gemeinsame Drehachse verdreht sein. Dabei kann der Betrag des Drehwinkels in Abhängigkeit von der Kette, der Geometrie der Zähne und/oder der unterschiedlichen Durchmesser der Kettenräder festgelegt sein, um einen vorgesehenen Eingriff der Kette an dem wenigstens einen Kettenrad mit kleinerem Durchmesser beim Wechsel auf dieses von dem benachbarten Kettenrad mit größerem Durchmesser sicherzustellen. Insbesondere können die Schaltgassen dabei derart angeordnet sein, dass bei einem Wechseln der Kette auf ein benachbartes Kettenrad stets eine Außenlasche auf einen dicken Zahn trifft.

In diesem Zusammenhang sei darauf hingewiesen, dass die Anordnung der Schaltgassen und benachbarter Kettenräder zueinander bei einer Erfindungsvariante so gewählt sein kann, dass während einer Verlagerung der Kette von einem Kettenrad auf ein benachbartes Kettenrad das zwischen beiden Kettenrädern verlaufende Kettentrum bzw. Kettenstück im Wesentlichen linear und tangential zu dem Fußkreis des Kettenrades mit kleinerem Durchmesser verläuft. Der o.g. Drehwinkel bzw. Winkelversatz ist also so gewählt, dass der Abstand des letzten in Eingriff befindlichen Zahns des größeren Kettenrades zu dem ersten in Eingriff befindlichen Zahn des kleineren Kettenrades im Wesentlichen ein Vielfaches der Kettenteilung beträgt.

Gemäß einer weiteren Ausführungsform kann zumindest das wenigstens eine Kettenrad mit kleinerem Durchmesser entlang seines Umfangs hinsichtlich seiner Materialstärke in Richtung quer zur Umfangsrichtung betrachtet mehrere Folgen mit dicken und dünnen Zähne aufweisen.

Gemäß einer weiteren Ausführungsform kann wenigstens ein Zahn eines oder mehrerer der Vielzahl an Kettenrädern eine Abstützkante aufweisen, die dazu ausgebildet ist, eine Außenlasche der Kette in Bezug auf die Drehachse des jeweils zugehörigen Kettenrads radial nach innen abzustützen.

Der Lösungsansatz einer sogenannten Innenlaschenpassage, bei der die Innenlaschen von einem Innenlaschenglied einseitig an einem Zahn vorbeilaufen, bevor die Außenlaschen eines nächsten Kettengliedes beidseitig einen Zahn flankieren, wurde bereits bei konventionellen Kettenrädern umgesetzt. In dem Dokument EP 0 642 972 A1 wird beispielsweise eine Innengliedpassage für den Abstieg der Kette vom größeren zum kleineren Ritzel bzw. Kettenrad gezeigt.

Eine Außenlaschenpassage für den Abstieg der Kette vom größeren zum kleineren Kettenrad ist technisch nicht sinnvoll, weil dann eine in einer Richtung parallel zur Drehachse zu messende Einprägung bzw. Schaltgasse zu tief auszubilden wäre. Dem Dokument EP 0 313 345 A1 ist ebenso wie dem Dokument DE 44 18 407 A1 eine Innengliedpassage für den Aufstieg der Kette vom kleineren zum größeren Ritzel bzw. Kettenrad zu entnehmen. Eine Außenlaschenpassage beim Aufstieg der Kette vom kleineren zum größeren Ritzel bzw. Kettenrad ist aber ebenfalls möglich und sinnvoll.

Bei konventionellen Kettenrädern gelingt nur eingeschränkt, dass die Kette stets an Schaltgassen hin zum Kettenrad mit kleinerem Durchmesser wechselt. Bei konventionellen Kettenrädern verlässt die Kette die Verzahnung am Kettenrad mit größerem Durchmesser häufig, wenn die Phasenzuordnung nicht stimmt. Dazu kann eine entsprechend große Kraft auf die Kette, beziehungsweise eine entsprechend große Auslenkung der Kettenführung eines hinteren Schaltwerks oder, z.B. eine frontseitige Einprägung zum Schalten auf das größere Ritzel ausreichend sein.

Bei der erfindungsgemäßen Mehrfach-Kettenradanordnung kann sicher erreicht werden, dass die Kette im Wesentlichen nur an Schaltgassen hin zu einem Kettenrad mit kleinerem Durchmesser wechselt. Sollte die Kette dennoch falsch einlaufen, z.B. aufgrund von kurz aufeinander folgenden Mehrfachschaltvorgängen, können bei einem Kettenrad mit kleinerem Durchmesser, das dünne und wenigstens einen dicken Zahn aufweist, der oder die dicken Zähne dafür sorgen, dass die Kette sofort wieder synchronisiert wird. Hierzu kann der wenigstens eine dicke Zahn des Kettenrads mit kleinerem Durchmesser aufgrund seiner größeren axialen Erstreckung ein Eingleiten einer Ketteninnenlasche verhindern.

Im umgekehrten Fall, das heißt beim Umlegen der Kette zu einem benachbarten Kettenrad mit größerem Durchmesser, ergeben sich bei den erfindungsgemäßen Kettenrädern hinsichtlich der Einhaltung der Zuordnung von wenigstens einem dicken Zahn zu Außenlaschengliedern der Kette und von dünnen Zähnen zu Innenlaschengliedern der Kette dieselben zu erfüllenden Bedingungen wie beim Umlegen der Kette zu einem benachbarten Kettenrad mit kleinerem Durchmesser. Hierbei kann durch das Vorsehen von Schalthilfen in der Form von Schaltgassen mit Aussparungen an den Zähnen am Kettenrad mit größerem Durchmesser, die zu Schaltgassen gehören, der Kette ausreichend Raum geboten werden, um sich weit genug in Richtung des Kettenrades mit größerem Durchmesser in einer Richtung parallel zur Drehachse der Kettenräder zu verlagern. Entlang einer hin zum Kettenrad mit größerem Durchmesser wechselnden Kette wird erfindungsgemäß jeweils eine Schaltgasse vorgesehen, wie dies bereits von Schalthilfen konventioneller Kettenräder bekannt ist. Anders als bei konventionellen Kettenrädern ist es erfindungsgemäß jedoch ebenfalls möglich, besonders tiefe Aussparungen dort vorzusehen, wo in Achsrichtung betrachtet besonders breite Kettenglieder auf wenigstens einen hinsichtlich seiner Materialstärke dicken Zahn treffen.

Im Gegensatz zu einer Anordnung von lediglich einem Kettenrad, wie sie in dem Dokument DE 10 2012 023 819 A1 offenbart ist, werden bei Anordnungen von mehreren Kettenrädern und Schaltwerken beziehungsweise Kettenwerfern zwangsläufig Kettenführungen am Schaltwerk beziehungsweise am Kettenwerfer verwendet. Die Führung der Kette gegen Kettenabwurf aufgrund von Erschütterungen oder Kettenschräglauf wird sicher durch die Kettenrolle des hinteren Kettenwerfers einer Fahrradschaltung verhindert und muss nicht durch die Kettenradgeometrie unterstützt werden. Verdickungen der Zähne in Richtung des kleineren Ritzels sind sogar nachteilig, da diese dem sanften und gerichteten Schalten auf größere Ritzel entgegenstehen können. Weiterhin ist der axiale Bauraum gerade bei modernen Ritzelanordnungen mit einer Vielzahl von Ritzeln sehr begrenzt.

Aus diesem Grund können in einer Weiterbildung der Erfindung jeweils die Oberflächen zumindest eines Teils der, vorzugsweise aller, Zähne jedes der Kettenräder auf einer zu einem benachbarten Kettenrad mit kleinerem Durchmesser weisenden Seite im Wesentlichen planar ausgebildet sein und im Wesentlichen in einer gemeinsamen Ebene liegen, wobei die einzelnen Zähne, die eine Einprägung oder eine Passageausnehmung aufweisen, hiervon ausgenommen sind. Es kann somit bei dieser Weiterbildung vom Prinzip der vollständigen Anpassung der Zahndicke an die Breite der Zwischenräume zwischen dem Paar von Ketten-Außenlaschen bzw. Ketten-Innenlaschen abgewichen werden. Der wenigstens eine dicke Zahn ist also in axialer Richtung betrachtet nur einseitig verdickt. Die Kettenführung verhindert, dass die Kette zu weit in Richtung eines benachbarten Kettenrades mit größerem Durchmesser verlagert werden kann.

Entsprechend ist es möglich, von Kettenrädern mit gleich dicken Zähnen bekannte Schaltgassen-Geometrien für die Seite der erfindungsgemäßen Kettenräder zu übertragen, die zum benachbarten Kettenrad mit kleinerem Durchmesser weist.

Bei dieser Weiterbildung kann die Materialstärke von dicken Zähnen in Richtung quer zur Umfangsrichtung betrachtet reduziert werden, so dass die dicken Zähne eine Materialstärke von 2,2 mm bis 3,5mm, bevorzugt maximal 2,45 mm aufweisen können.

Die Bedingungen für die Einhaltung von Phasenzuordnungen sind gleichermaßen sowohl für das Wechseln der Kette zu einem Kettenrad mit kleinerem Durchmesser als auch für das Wechseln der Kette zu einem Kettenrad mit größerem Durchmesser einzuhalten. Das Einhalten dieser beiden Bedingungen an einem einzigen Kettenrad ist nicht zwangsläufig gegeben, da diese Bedingungen einander widersprechen oder sich wechselseitig ausschließen können. Daher können konstruktive Maßnahmen zum Entkoppeln dieser Zwangsbedingungen vorgesehen werden. Es können Schaltgassen für das Wechseln hin zum Kettenrad mit größerem Durchmesser sowohl entlang eines im Wesentlichen geraden Verlaufs der Kette, wie oben bereits beschrieben, als auch entlang eines bogenförmigen beziehungsweise abgeknickten Verlaufs der Kette vorgesehen sein. Bei einem bogenförmigen Verlauf können die Zähne an den Enden der Schaltgasse an benachbarten Kettenrädern um die Kettenrad-Drehachse aufeinander zu gedreht sein. Zudem kann der Abstand zwischen den Kettenbolzen radial innerhalb der Kettenrollen, die jeweils an den benachbarten Kettenrädern eingreifen, verkürzt sein.

Weiterhin kann der Wechsel auf ein Kettenrad mit größerem Durchmesser in Form eines sogenannten "Innenlaschen-Aufstiegs" als auch in Form eines sogenannten "Außenlaschen-Aufstiegs" realisiert werden, wobei die entsprechenden Bezeichnungen abgeleitet sind aus der Art des letzten Kettengliedes entlang der Schaltgasse, das eine radiale Distanz nach radial außen überbrückt.

Zu den Vorteilen der erfindungsgemäßen Mehrfach-Kettenradanordnung gehören nicht abschließend die Folgenden:
- Da die Kette synchronisiert zu dem wenigstens einen dicken Zahn und den dünnen Zähnen auf der entsprechenden Kettenradverzahnung aufliegt, entfällt die Notwendigkeit, für die zwei Eingriffsvarianten, das heißt für die Zuordnung eines Innenlaschengliedes oder eines Außenlaschengliedes an einem Referenzzahn, entsprechende Schalthilfen vorzusehen. Dies reduziert die Komplexität der Anordnung.
- Das Schalten auf Kettenräder mit kleinerem Durchmesser unter Last wird verbessert. Damit ergeben sich weniger Variationen bei Schaltvorgängen und ein reduziertes Risiko von unerwünschten Schaltzuständen.
- Die Vibrationen der Kette bei einem Schräglauf werden reduziert.
- Ein sogenannter "Autoshift", das heißt ein unbeabsichtigtes Wechseln der Kette zu einem benachbarten Kettenrad, kann weitestgehend vermieden werden. Auch die Gefahr eines Abspringens der Kette vom Kettenrad wird vermindert.
- Der Verschleiß wird reduziert, da selbst beim Vorsehen von Einprägungen an den Zähnen infolge der vorhandenen dicken Zähne noch ausreichend große Kontaktflächen zwischen Kettenrollen und Zahnflanken bestehen.
- Insbesondere bei einem Innenlaschen-Abstieg der Kette kann mit der Erfindung auch bei großen Sprüngen, das heißt bei großen Differenzen der Zähneanzahl benachbarter Kettenräder, ein sanftes Schalten sichergestellt werden.

Die erfindungsgemäße Mehrfach-Kettenradanordnung ist somit ebenfalls für einen Einsatz bei Elektrofahrrädern (E-Bikes) bzw. Fahrrädern mit Elektroantrieb geeignet. Elektrofahrräder weisen zum Erreichen einer vergleichsweise hohen Beschleunigung häufig große Zahnsprünge zwischen benachbarten Kettenrädern einer Mehrfach-Kettenradanordnung auf. Zudem wirken durch das gleichbleibende Drehmoment des Elektromotors große Kräfte auf die Kette. Die sich daraus ergebenden Anforderungen an eine Mehrfach-Kettenradanordnung für eine Hinterradnabe werden von der erfindungsgemäßen Mehrfach-Kettenradanordnung erfüllt, weshalb ein sanftes und sicheres Schalten erreicht wird.

In einer weiteren Ausführungsform kann es zweckmäßig sein, den erfindungsgemäßen Ansatz zum Umlegen der Kette an Kettenrädern mit wenigstens einem dicken Zahn und dünnen Zähnen nicht bei allen Kettenrädern einer Mehrfach-Kettenradanordnung vorzusehen. Dies gilt insbesondere für Mehrfach-Kettenradanordnungen, bei denen Kettenräder mit geringen Zähnezahldifferenzen gegenüber benachbarten Kettenrädern vorgesehen sind oder wenn z.B. aufgrund der Gangsprünge auch Kettenräder mit ungeraden Zähnezahlen bei den größeren Ritzeln verwendet werden sollen. In diesem Fall könnte ein Kettenrad mit einer ungeraden Zähnezahl und ausschließlich dünnen Zähnen zwischen zwei Kettenrädern mit geraden Zähnezahlen jeweils mit wenigstens einer Zahnfolge mit einem zwischen zwei dünnen Zähnen angeordneten dicken Zähnen angeordnet werden.

Daher kann die Mehrfach-Kettenradanordnung in einer weiteren Ausführungsform wenigstens ein weiteres Kettenrad umfassen, das in Richtung quer zur Umfangsrichtung betrachtet hinsichtlich ihrer Materialstärke im Wesentlichen gleich dicke Zähne aufweist. Das wenigstens eine weitere Kettenrad kann ferner zu dem wenigstens einen der Vielzahl an Kettenrädern mit wenigstens einem dicken Zahn und dünnen Zähnen benachbart angeordnet sein.

In dieser Ausführungsform können somit konventionelle Kettenräder mit gleich dicken Zähnen und erfindungsgemäße Kettenräder mit wenigstens einem dicken Zahn und dünnen Zähnen gemeinsam in einer Mehrfach-Kettenradanordnung vorgesehen sein. Folglich kann sich bei einem Einsatz konventioneller Kettenräder in einer Mehrfach-Kettenradanordnung mit einer geringen Zähnezahldifferenz der Kettenräder eine Übergangsstelle von einem Kettenrad mit kleinerem Durchmesser und gleich dicken Zähnen unterhalb der Übergangsstelle und einem Kettenrad mit wenigstens einem dicken Zahn und dünnen Zähnen oberhalb der Übergangsstelle ergeben.

Es ist bei dieser Ausführungsform zu gewährleisten, dass die Kette beim Wechsel zum ersten Kettenrad mit wenigstens einem dicken Zahn und dünnen Zähnen, dem Übergangskettenrad, in der richtigen Phasenzuordnung auf dieses Kettenrad aufläuft. Dies bedeutet, dass ein Außenlaschenglied an dem wenigstens einen dicken Zahn oder ein Innenlaschenglied an einem dünnen Zahn zum Eingriff kommen muss. Beim Wechsel der Kette in der entgegengesetzten Richtung über die Übergangsstelle hinweg spielt die Synchronität keine wesentliche Rolle.

Beim Auflauf der Kette auf das Übergangskettenrad könnte eine für die Außenlasche vorgesehene Einprägung bei entsprechender geometrischer Gestaltung auch eine Innenlasche aufnehmen. Dieser nicht synchronisierte Auflauf der Kette vom Kettenrad mit kleinerem Durchmesser auf das Kettenrad mit größerem Durchmesser würde sich dann folgend negativ auswirken, weil eine Synchronität von Kette und Verzahnung am Kettenrad mit größerem Durchmesser in dieser Situation nicht gegeben wäre.

Das bedeutet, dass eine für eine Außenlasche oder für eine Innenlasche am Übergangskettenrad vorgesehene Ausnehmung oder Einprägung als Bestandteil der Schaltgasse auch immer genau diese zugehörige Art von Lasche aufnehmen muss. Die Synchronität zwischen Kette und Zähnen am Übergangskettenrad ergibt sich dann zwangsläufig. Das Aufnehmen einer "falschen" bzw. nicht zugehörigen Art von Lasche verhindert die Synchronität. Dem wird durch die Erfindung entgegengewirkt.

In einer ersten Variante zum Entgegenwirken kann die Ausnehmung oder Einprägung so gestaltet werden, dass keine "falsche" Lasche aufgenommen werden kann. Alternativ dazu kann in einer zweiten Variante sichergestellt werden, dass von vornherein bereits stets die "richtige" Lasche an der Einprägung anliegt.

Bei der ersten Variante kann die Aufnahme einer "falschen" Kettenlasche in der Ausnehmung oder Einprägung durch das Vorsehen von Abgleitschrägen verhindert werden. Demnach kann wenigstens eine Ausnehmung oder Einprägung eine Abgleitschräge aufweisen. Damit verbunden kann vorgesehen sein, dass die Kette fortwährend in alternierender Positionierung vom Kettenrad mit kleinerem Durchmesser abläuft, zum Beispiel durch das Ausbilden einer ungeraden Anzahl von Zähnen am Kettenrad mit kleinerem Durchmesser.

Die zweite Variante kann darin bestehen, die Kette an einem Kettenrad unterhalb der Übergangsstelle mit einer geradzahligen Anzahl von Zähnen zu versehen und die Kette beim normalen Ablaufen auf diesem Kettenrad an dem wenigstens einen dicken Zahn zum Aufreiten zu bringen. Bei diesem Aufreiten kann sich ein Innenlaschenglied auf die Spitze des dicken Zahns setzen, wobei sich eine längere Wegstrecke entlang der aneinandergereihten Kettenglieder ergibt, im Vergleich zu der Wegstrecke an Kettengliedern, die normal in die Zähne eingreifen und nicht aufreiten. Die längere Wegstrecke kann ein Umschalten bewirken von einem Zustand, bei dem ein Innenlaschenglied am dicken Zahn anliegt, hin zu einem Zustand, bei dem dann anschließend und bei darauf folgenden Umläufen ein Außenlaschenglied am dicken Zahn eingreift.

Die Erfindung wird nun folgend auf der Grundlage von Figuren bevorzugter Ausführungsformen beschrieben:
- Fig. 1: ein Kettenrad mit dicken und dünnen Zähnen aus dem Stand der Technik;
- Fig. 2: ein Kettenrad gemäß Fig. 1 mit der in Eingriff befindlichen Rollenkette;
- Fig. 3: eine Mehrfach-Kettenradanordnung mit drei gezeigten Kettenrädern mit Prinzipdarstellungen der Ketten, die entlang von Schaltgassen zwischen Kettenrädern wechselt, betrachtet von der Seite der kleinsten Kettenrads;
- Fig. 4: eine Mehrfach-Kettenradanordnung gemäß Fig. 3, betrachtet von der Seite des größten Kettenrads;
- Fig. 5: ein Kettenrad einer Mehrfach-Kettenradanordnung mit einem abgeschrägten Zahn zum Unterstützen des Wechselns der Kette auf das nächst kleinere Kettenrad bei einer konventionellen Mehrfach-Kettenradanordnung;
- Fig. 6: ein Ausschnitt der Mehrfach-Kettenradanordnung gemäß Fig. 4, betrachtet von der Seite des größten Kettenrads, für einen Wechsel der Kette zum kleineren Kettenrad;
- Fig. 7: Ausnehmungen bzw. Einprägungen entlang der Schaltgasse für einen Wechsel der Kette zum kleineren Kettenrad entsprechend Fig. 6, bei dem eine Innenlaschenpassage stattfindet;
- Fig. 8: Ausnehmungen bzw. Einprägungen entlang der Schaltgasse für einen Wechsel zum kleineren Kettenrad in einer abgewandelten Ausführungsform, bei dem wie in Fig. 7 eine Innenlaschenpassage in Verbindung mit einem Innenlaschen-Abstieg erfolgt;
- Fig. 9: eine schematische Darstellung des Umschaltens hin zu einem größeren Kettenrad von der Mehrfach-Kettenradanordnung gemäß Fig. 4, betrachtet von der Seite des kleineren Kettenrads, bei dem eine Innenlaschenpassage in Verbindung mit einem Innenlaschen-Aufstieg stattfindet;
- Fig. 10: Details der Schaltgasse für das Umschalten hin zu einem größeren Kettenrad gemäß Fig. 9;
- Fig. 11: eine Darstellung von Kettenrad und Kette bei einem Umschaltvorgang mit Außenlaschen-Aufstieg in Kombination mit einer Innenlaschenpassage an einem Kettenrad einer konventionellen Mehrfach-Kettenradanordnung;
- Fig. 12: eine schematische Darstellung des Umschaltens hin zu einem größeren Kettenrad gemäß Fig. 4, betrachtet von der Seite des kleineren Kettenrads, bei dem ein Außenlaschen-Aufstieg mit nachfolgender Innenlaschenpassage stattfindet;
- Fig. 13: Details der Schaltgasse für das Umschalten hin zu einem größeren Kettenrad gemäß Fig. 12;
- Fig. 14: ein Kettenrad einer Mehrfach-Kettenradanordnung mit einer Einprägung bzw. Schaltgasse bei einer konventionellen Mehrfach-Kettenradanordnung, bei dem entweder ein Innenlaschen-Aufstieg in Kombination mit einer Innenlaschenpassage oder ein Außenlaschen-Aufstieg mit nachfolgender Innenlaschenpassage stattfindet; und
- Figuren 15 und 16: Darstellungen einer Einprägung an einem Kettenrad einer konventionellen Mehrfach-Kettenradanordnung, bei der der Eingriff eines Außenlaschenglieds an einem für den Eingriff dieses Außenlaschenglieds geeigneten Zahnes verhindert wird.

Auch im Folgenden beziehen sich die Begriffe "dick" und "dünn" auf die Materialstärke von Zähnen in einer Richtung quer zur Umfangsrichtung eines Kettenrads betrachtet. Ferner beziehen sich die Ausdrücke "groß" und "klein" in Bezug auf einzelne Kettenräder auf die Größe des Durchmessers Zähnezahl der jeweiligen Kettenräder.

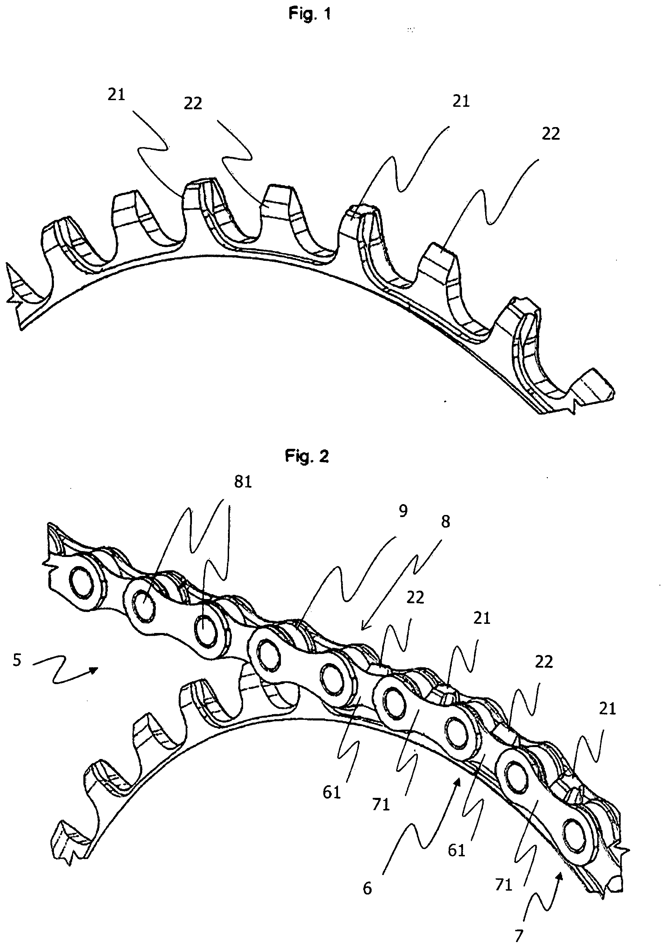

Die Figur 1 zeigt ein Kettenrad mit dicken Zähnen 21 und dünnen Zähnen 22 aus dem Stand der Technik. Dabei handelt es sich um ein Kettenrad für eine Tretkurbel an einem Fahrrad.

In Figur 2 ist zu erkennen, wie die dicken Kettenrad-Zähne 21 und die dünnen Kettenrad-Zähne 22 synchronisiert zu den Außenlaschengliedern 7 und zu den Innenlaschengliedern 6 der Kette 5 in die Kette 5 eingreifen. Die Zahnform folgt dem Prinzip der Anpassung der Zahndicke an die Breite der Zwischenräume zwischen dem Paar von Ketten-Außenlaschen bzw. Ketten-Innenlaschen.

Die Kette 5 ist als Rollenkette ausgebildet und verfügt über Außenlaschenglieder 7 und Innenlaschenglieder 6, die an Kettengelenken 8 drehbar miteinander verbunden sind. An einem Kettengelenk 8 sind an einem Kettenbolzen 81 paarweise Außenlaschen 71, paarweise Innenlaschen 61 sowie Kettenrollen 9 angeordnet. Dabei ist der Kettenbolzen 81 fest in den Außenlaschen 71 eingepresst und/oder mit diesen vernietet. Die Innenlaschen 61 weisen Kragen auf, auf denen die Kettenrolle 9 drehbar gelagert ist. Die Innenlaschen 61 sind drehbeweglich gegenüber dem Kettenbolzen 81.

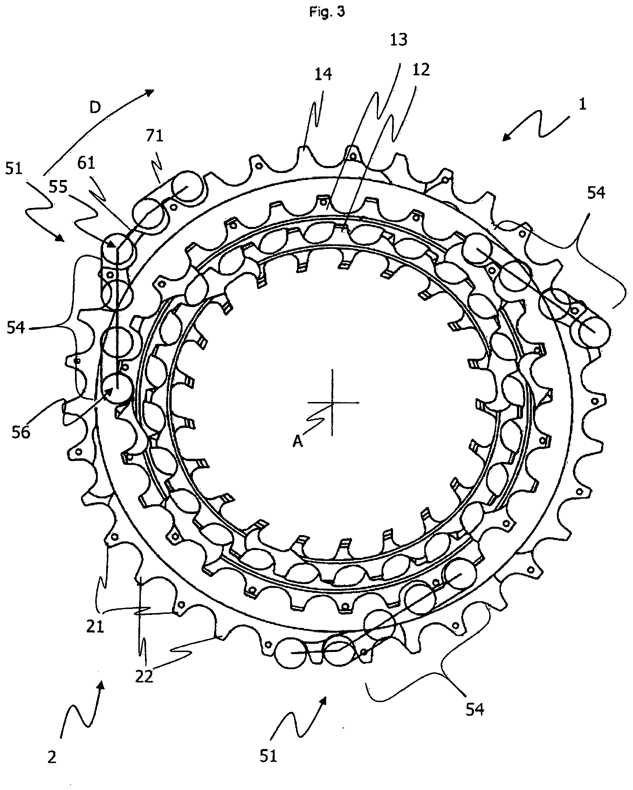

Figur 3 zeigt eine Schnittansicht durch eine Mehrfach-Kettenradanordnung 1 gemäß der vorliegenden Erfindung, betrachtet von der Seite der kleineren Kettenräder, bei der noch die drei größten Kettenräder 12, 13 und 14 sichtbar sind. Das kleinere Kettenrad 12 und das mittlere Kettenrad 13 gehören zu einer einstückig ausgebildeten konischen Tragstruktur mit Durchbrüchen, bei der in radialer Richtung und in Richtung parallel zur Drehachse A verlaufende Stege 11 die Verbindung zwischen dem kleineren Kettenrad 12 und dem mittleren Kettenrad 13 herstellen. Das größere Kettenrad 14 ist als Abschlusskettenrad ausgebildet und stützt sich mit einer nicht dargestellten Stützscheibe nach radial innen gegenüber einem nicht dargestellten Antreiber und gegenüber der ebenfalls nicht dargestellten Nabenachse ab.

Im Antriebsfall dreht sich die Mehrfach-Kettenradanordnung 1 in Drehrichtung D.

An der Mehrfach-Kettenradanordnung 1 sind in schematischer Weise mehrere Kettenstücke 51 einer Kette angeordnet, um die verschiedenen Zustände zu veranschaulichen, die beim Umschalten der Kette 5 von einem der Kettenräder 12, 13, 14 auf ein benachbartes Kettenrad vorliegen. Die Innenlaschen 61 sind lediglich schematisch durch eine Linie zwischen benachbarten Kettengelenken veranschaulicht. Von den Außenlaschen 71 sind zum Teil die Umrisse gezeigt. Es ist zudem nicht dargestellt, ob sich Zähne innerhalb oder außerhalb des Zwischenraumes von einem Paar an Außenlaschen 71 beziehungsweise einem Paar an Innenlaschen 61 befindet. Vielmehr sind die Umrisse von den Zähnen 2 und von den Außenlaschen 71 in schematischer Weise gleichberechtigt dargestellt.

Die Zähne 2 an den Kettenrädern entsprechen entweder dicken Zähnen 21 oder dünnen Zähnen 22, wobei die dicken Zähne 21 durch Kreise im Zahnkörper gekennzeichnet sind, die keine Geometrie-Elemente an den Zähnen 2 sind, sondern in der bildlichen Darstellung lediglich der Unterscheidung gegenüber den dünnen Zähnen 22 dienen. Diese Darstellung ist notwendig, da sich die dicken Zähne 21 nur in axialer Richtung außerhalb der Zeichenebene erstrecken und damit in der Frontansicht nicht erkennbar sind.

Die zwischen den Kettenrädern 12, 13 und 14 angeordneten Kettenstücke 51 sind entweder ablaufende Kettenstücke, die sich von dem Kettenrad 14 mit größerem Durchmesser hin zu dem Kettenrad 13 mit kleinerem Durchmesser erstrecken, oder sie sind auflaufende Kettenstücke, die sich von dem Kettenrad 13 mit kleinerem Durchmesser hin zu dem Kettenrad 14 mit größerem Durchmesser erstrecken.

Freie Kettenstücke 54 bestehen aus einer Teilmenge der Kettenglieder 6, 7 der ablaufenden Kettenstücke, beziehungsweise der auflaufenden Kettenstücke. Die Kettengelenke im Innern von freien Kettenstücken 54 stehen nicht im Eingriff an Zähnen 2 der Kettenräder 12, 13, 14, wobei ein "Eingriff" zwischen Kettenradzähnen 2 und Kettengliedern dadurch charakterisiert ist, dass der jeweilige Kettenradzahn 2 in den Zwischenraum zwischen den Kettenlaschen 61, 71 eines jeweiligen Kettenlaschenpaars eingetreten ist, und dass sich die Kettenrolle 9 zumindest ausreichend weit radial innen in der Lücke zwischen den Kettenradzähnen 2 befindet. An den Enden von freien Kettenstücken 54 befinden sich jeweils ein Abknick-Gelenk 55 zugeordnet zum jeweils größeren Kettenrad 13, 14 und ein Tangential-Gelenk 56 zugeordnet zum jeweils kleineren Kettenrad 12, 13. Der Kettenbolzen 81 an dem Abknick-Gelenk 55 befindet sich im Wesentlichen mittig zwischen zwei Zähnen 2 am Kettenrad 14, 13 mit dem größeren Durchmesser und verbindet gegeneinander abgeknickte Kettenglieder 6, 7. Der Kettenbolzen an einem Tangential-Gelenk 56 ist das erste Kettengelenk 8, dessen Kettenrolle sich im Wesentlichen mittig zwischen zwei Zähnen 2 am Kettenrad 13, 12 mit dem kleineren Durchmesser befindet, wobei die Kette dort tangential auf das kleinere Kettenrad 12, 13 einläuft.

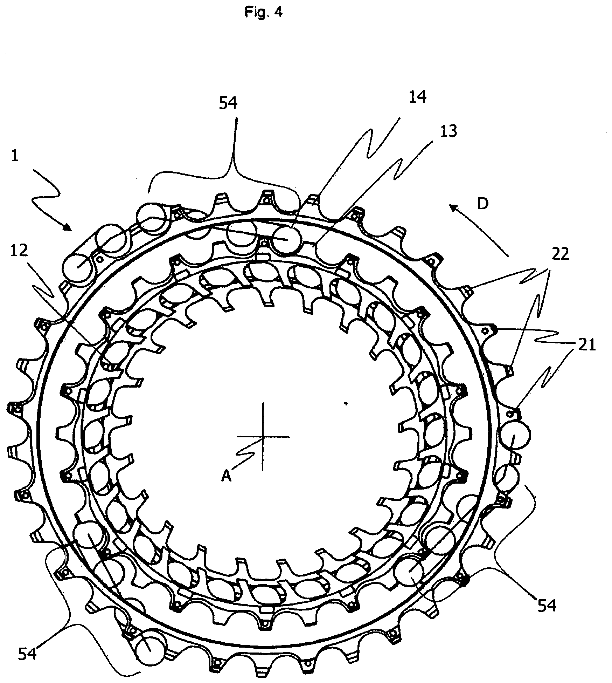

Figur 4 zeigt die Mehrfach-Kettenradanordnung gemäß Figur 3, allerdings betrachtet von der Seite des größten Kettenrads 14. Weiter radial innen liegende Bestandteile der Kettenräder, die unwesentlich sind für die Umschaltvorgänge, sind nicht dargestellt.

Beim Schalten auf ein größeres Kettenrad wird von einem Außenlaschenaufstieg gesprochen, wenn der Zahn des größeren Ritzels an dessen Einlaufflanke sich das Ende des freien Kettenstückes 54 abstützt eine Außenlasche aufnimmt. Wird dieser Zahn von einer Innenlasche passiert, ist der Aufstieg ein Innenlaschenaufstieg. Die freien Kettenstücke in den Figuren 3 und 4 sind entsprechend gekennzeichnet.

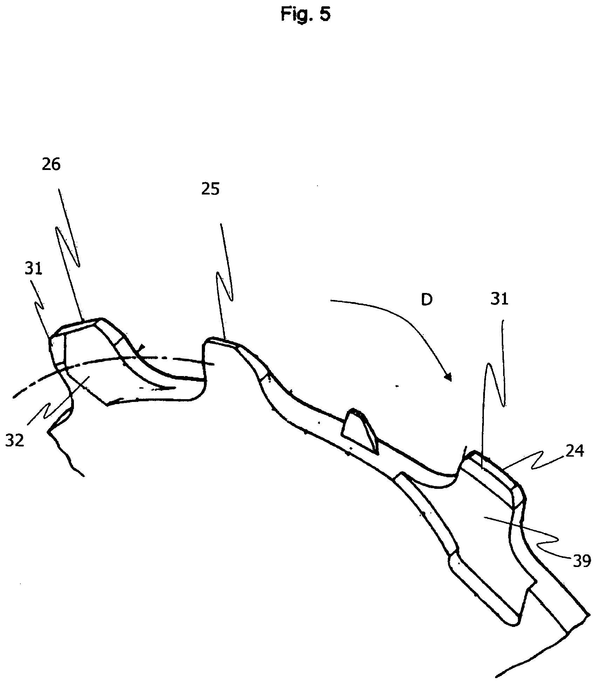

Figur 5 ist ein Kettenrad einer Mehrfach-Kettenradanordnung aus dem Stand der Technik zu entnehmen. Ein abgeschrägter Passagezahn 26 bietet bei einer Innenlaschenpassage einem Innenlaschenglied Raum für die Passage am Passagezahn 26.

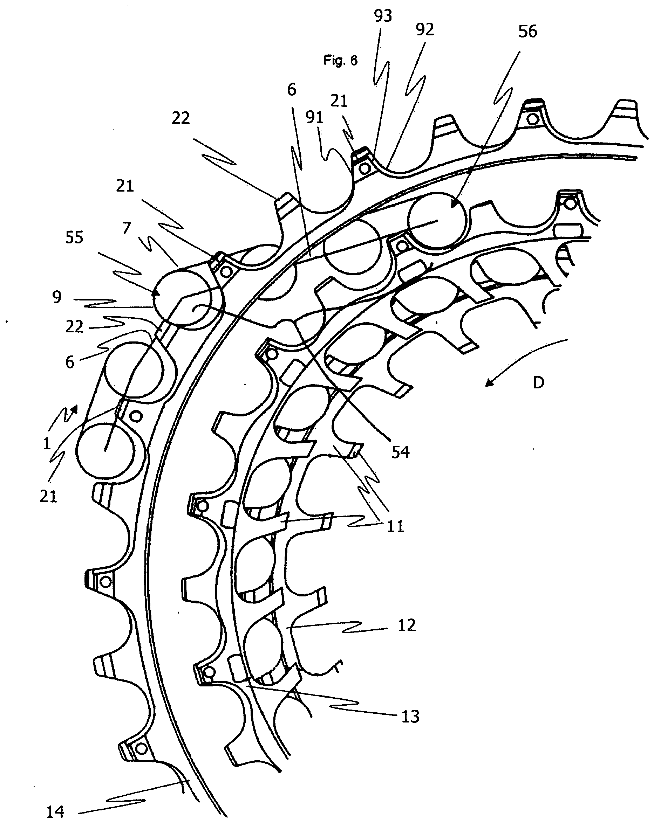

In Figur 6 ist ein Innenenlaschen-Abstieg (IAb) bei einem erfindungsgemäßen Kettenrad gezeigt, von der Seite des größten Kettenrads 14 aus betrachtet. Die Innenlasche 61 ist das erste Kettenglied das das Ritzel verlässt. Auch wenn die Kette erst bei der Außenlasche abknickt (da sie von der Kante 37 gehalten wird) greift schon die Innenlasche 61 nicht mehr in das Ritzel ein.

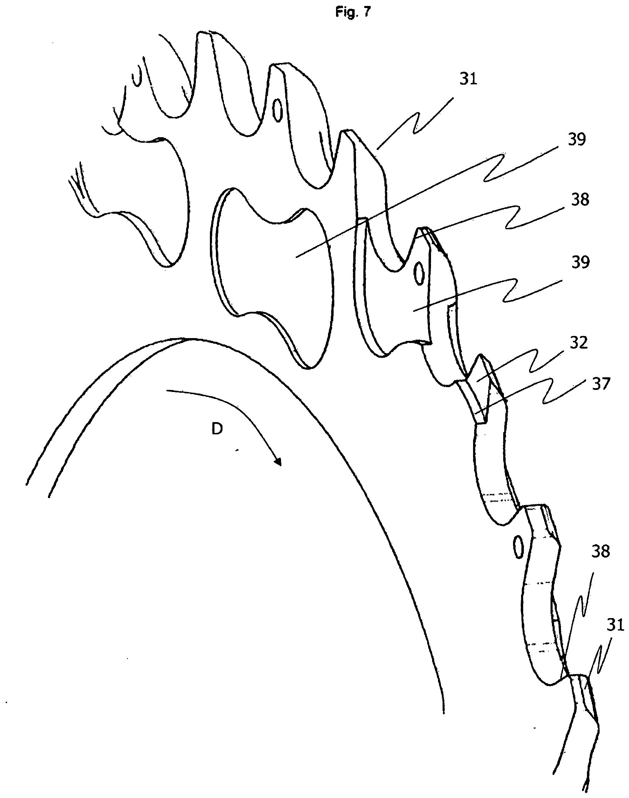

Es sei angemerkt, dass in den Figuren 4 und 6 gezeigt ist, dass die dicken Zähne 21 des größten Kettenrades 14 jeweils eine lastübertragende Zahnflanke (in Drehrichtung D vorlaufend) 91 aufweisen, die mit voller Materialstärke ausgebildet ist. Der Bereich nahe der davon abgewandten nachlaufenden Zahnflanke (Rückflanke) 92 dieser dicken Zähne 21 ist jedoch hinsichtlich der Materialstärke gestuft ausgebildet und weist eine zumindest abschnittsweise entlang ihrer Kontur vorgesehenen Ausnehmung 93 auf, so dass sich in radialer Richtung einwärts betrachtet ein gestuftes oder schulterförmiges Zahnprofil ergibt. Ein Tangentialschnitt durch einen solchen Zahn 21 ergibt in der Draufsicht ein L-Profil, wenn man berücksichtigt, dass die Rückseite des Kettenrades 14 im Wesentlichen planar ausgebildet ist (siehe Fig. 7).

In Figur 7 zeigt ein mögliches Ausführungsbeispiel für die Ausnehmungen bzw. Einprägungen 39 entlang der Schaltgasse für einen Wechsel zum kleineren Kettenrad, wenn ein Innenlaschen-Abstieg gemäß Figur 6 stattfinden soll. Die Innenlasche passiert den Zahn 22 der durch die fronseitige Anprägung entsprechenden Raum gibt. Die Ausnehmung bzw. Einprägung 39 gibt der Außenlasche Raum.

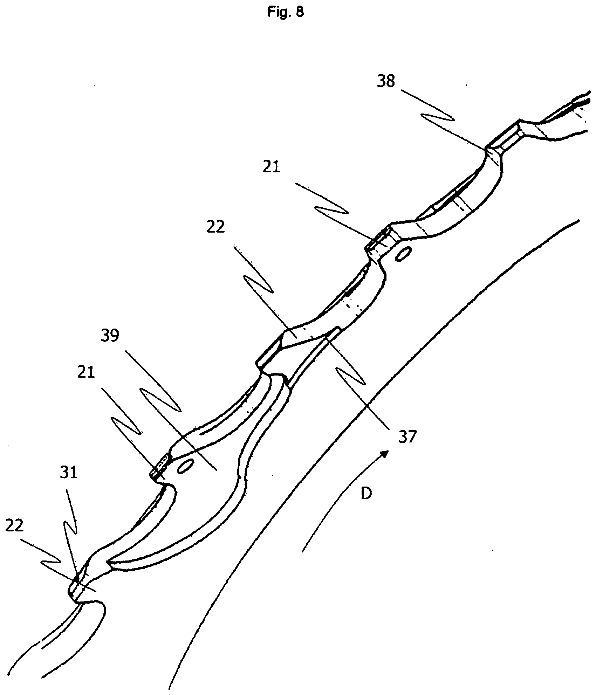

In Figur 8 sind die Ausnehmungen bzw. Einprägungen 39 entlang der Schaltgasse für einen gegenüber der Ausführung gemäß Figur 7 abgewandelten Wechsel zum kleineren Kettenrad dargestellt, bei dem eine Innenlaschenpassage am Passagezahn 22 erfolgt. Es ist zu erkennen, dass die Einprägung 39 für eine Außenlasche steiler nach radial innen verläuft, als dies bei der in Figur 7 der Fall ist. Damit wird im Vergleich zu Figur 7 ein früheres Abknicken der Kette realisiert mit der Folge, dass etwas mehr Kettenlänge zum Einlauf in das benachbarte kleinere Ritzel bereitgestellt wird. Damit kann das kleinere Ritzel gegenüber dem größeren Ritzel gegenläufig zur Antriebsrichtung verdreht werden.

Die radiale Position der Abstützkante 37 an der Einprägung 39 bestimmt, wie weit sich eine in dieser Einprägung 39 aufgenommene Außenlasche nach radial innen verlagern kann.

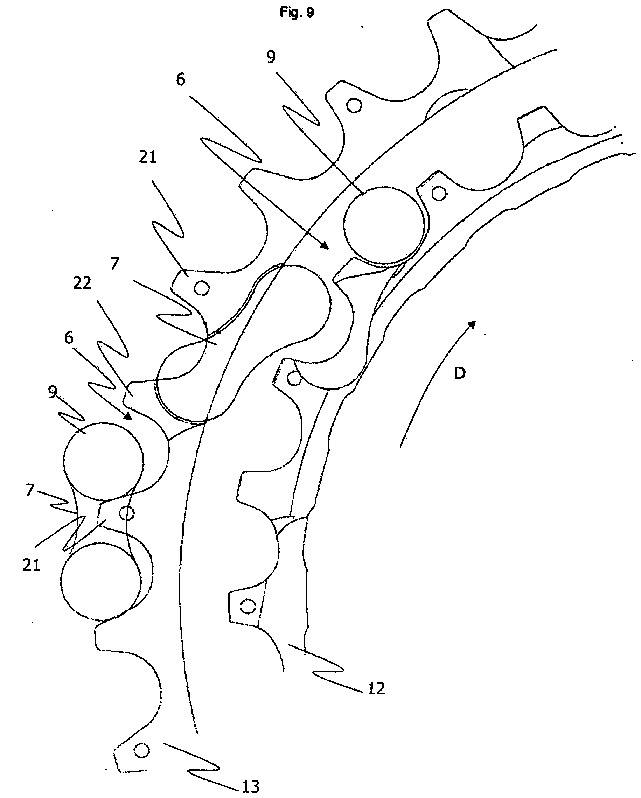

Figur 9 zeigt schematisch das Umschalten hin zu einem größeren Kettenrad an der Mehrfach-Kettenradanordnung gemäß den Figuren 3 und 4, betrachtet von der Seite des kleineren Kettenrads, wobei der Zahn 22, an dessen Einlaufflanke die Kette aufliegt, eine Außenlasche aufnimmt.

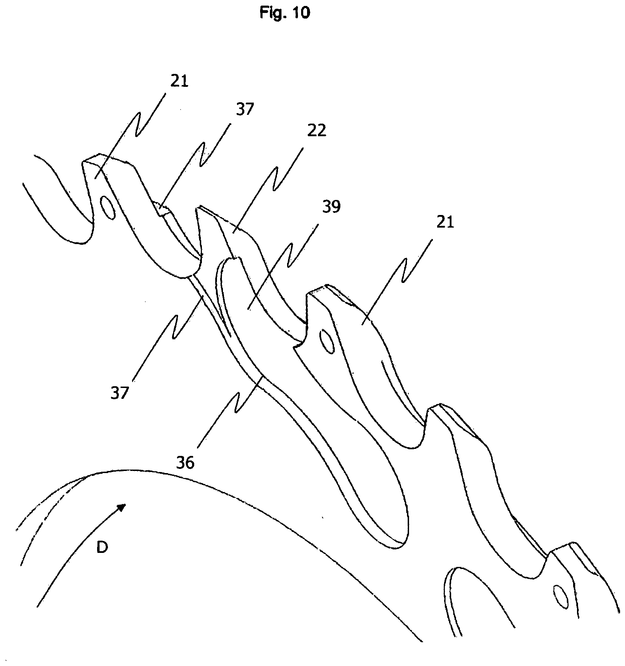

Figur 10 zeigt Details der Schaltgasse für einen Umschaltvorgang gemäß Figur 9, betrachtet von der Seite des kleineren Kettenrads. Es ist ersichtlich, wie weit eine Rampe 36 reichen kann, um der Außenlasche Raum zu bieten und um die Außenlasche mittels der Abstützkante 37 radial nach innen abzustützen. Die Kante 37 erstreckt sich über eine Doppelausnehmung bzw. -einprägung für Außen- und Innenlasche. Das Segment auf den Bezugszeichen 37 zeigt stützt die Innenlasche. Die wesentliche Abstützfunktion wird aber vor allem durch die Einlaufflanke an dem Zahn 21 realisiert.

Werden die Kettenräder 12, 13 ausgehend von der in den Figuren 3 und 4 dargestellten Phasenzuordnung in ihrer Winkelstellung zueinander verdreht, so dass sich entsprechend des Winkelversatzes das Tangentialgelenk 56 und das Abknick-Gelenk 55 aufeinander zu bewegen, dann verändert das Abknick-Gelenk 55 seine Position nach radial außen. Es kommt zu einem abknickenden bzw. bogenförmigen Verlauf des freien Kettenstückes 54, der durch eine entsprechende Positionierung der Einprägung 39 noch verstärkt werden kann. Entsprechend ist auch die radiale Position der Abstützkante 37 festzulegen. Das Maß des Aufeinanderzubewegens bei der Anordnung der beiden Kettenräder 12, 13 ist dadurch begrenzt, dass die Einprägung nicht bis zur Lastflanke 38 (Fig. 7) des Abweisezahnes 24 (Fig. 5) reichen sollte, damit an dem Abweisezahn 24 eine möglichst große Fläche für den Kontakt zwischen Lastflanke 38 und Kettenrolle 9 zur Verfügung steht. Eine entsprechend mögliche Gestaltung ist in Figur 10 gezeigt.

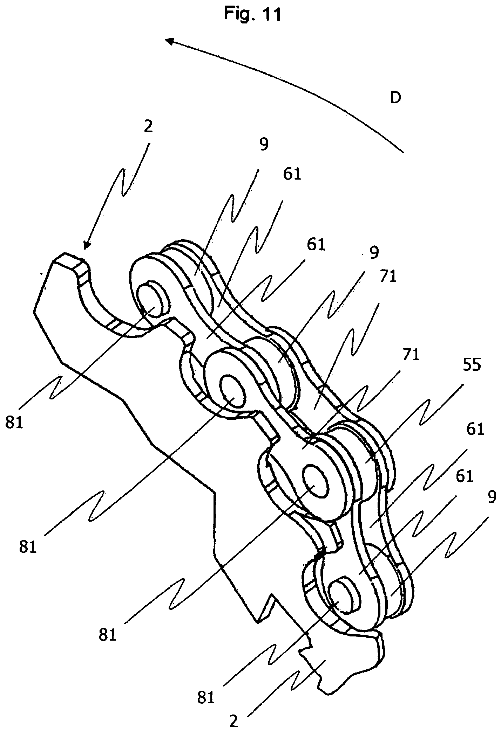

Figur 11 ist eine Darstellung einer Einprägung für den Außenlaschen-Aufstieg in Kombination mit einer Innenlaschenpassage an einem Kettenrad einer konventionellen Mehrfach-Kettenradanordnung zu entnehmen.

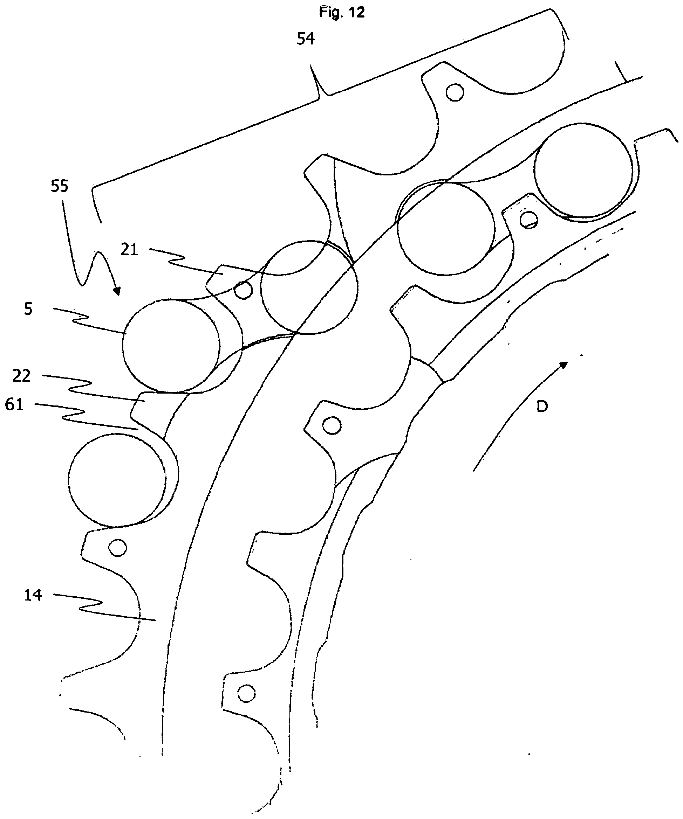

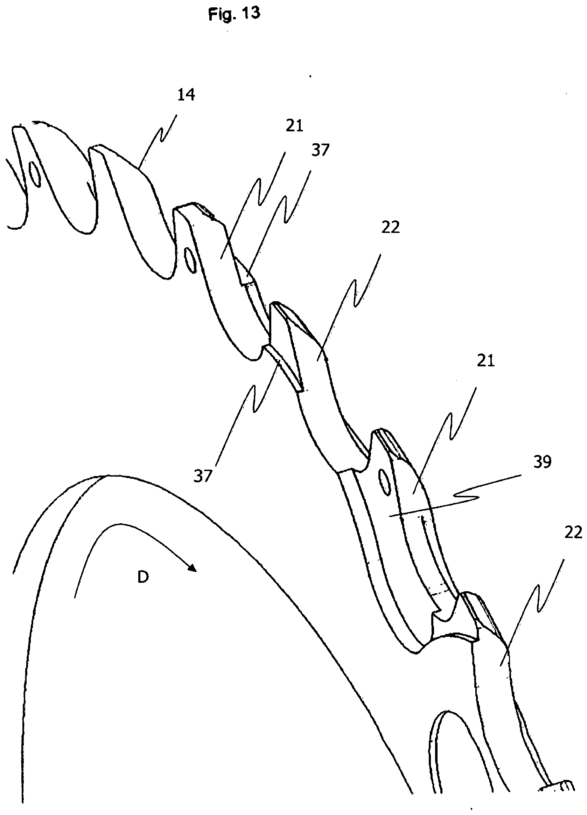

Figur 12 zeigt schematisch das Umschalten hin zu einem größeren Kettenrad 14 bei der Mehrfach-Kettenradanordnung gemäß den Figuren 3 und 4, betrachtet von der Seite des kleineren Kettenrads 13. Der dünne Zahn 22, an dessen Einlaufflanke die Kette 5 aufliegt, ist dafür geeignet eine Innenlasche 61 aufzunehmen, wobei die Innenlasche 61 beim Aufstieg nicht eingreift, sondern an der Einprägung anliegt. Die Figur 13 zeigt die Details der Schaltgasse für das Umschalten hin zu einem größeren Kettenrad 14 der Mehrfach-Kettenradanordnung, das heißt bei einem Umschaltvorgang gemäß Figur 12.

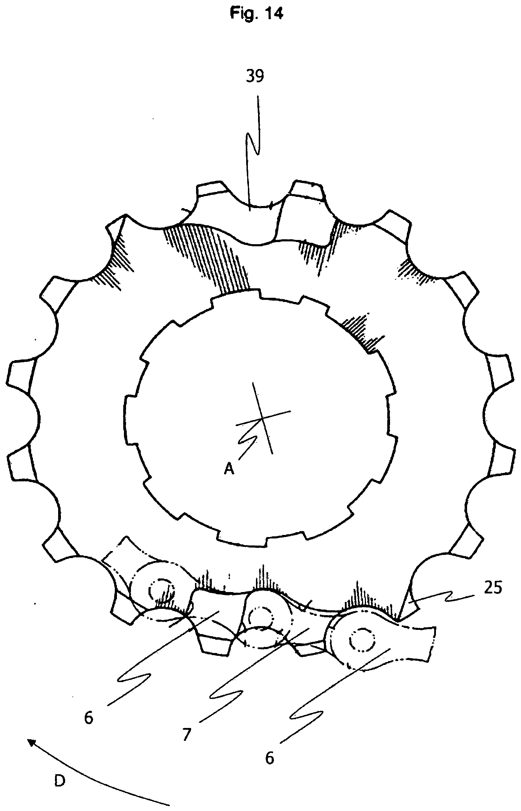

In Figur 14 ist ein Kettenrad einer konventionellen Mehrfach-Kettenradanordnung mit einer Einprägung 39 gezeigt, bei dem im ersten möglichen Eingriffsfall ein Außenlaschen-Aufstieg mit nachfolgender Innenlaschenpassage stattfindet. Dabei nimmt die Einprägung 39 die Außenlasche eines Außenlaschenglieds auf.

Am Übergangskettenrad kann eine Gestaltung entsprechend Figur 10 und/oder 12 verwendet werden, wenn entsprechende Anpassungen an die vorliegenden dicken und dünnen Zähne vorgenommen werden und weitere Bedingungen beachtet werden.

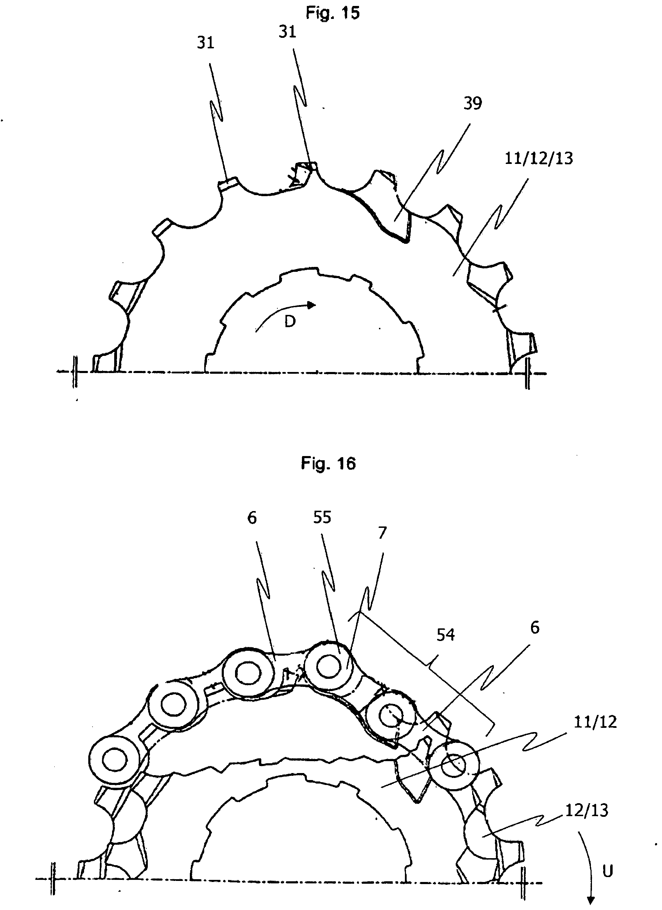

In Figur 15 ist eine Einprägung an einem Kettenrad einer Mehrfach-Kettenradanordnung für den Innenlaschen-Aufstieg mit nachfolgender Außenlaschenpassage gezeigt. Der wenigstens eine in Richtung senkrecht zur Zeichnungsebene verdickte Zahn ist nicht näher dargestellt.

Figur 16 veranschaulicht eine Zuordnung der Kette gemäß einem Innenlaschen-Aufstieg. Die folgende Außenlasche 7 gelangt nicht in Eingriff, sondern wird abgewiesen, was zu einer Passage dieser Außenlasche 7 und auch der nachfolgenden Innenlasche 6 führt. Auf diese Weise wird der Eingriff eines Außenlaschenglieds an einem für den Eingriff dieses Außenlaschenglieds eigentlich geeigneten Zahns verhindert.

Mit entsprechenden Anpassungen kann dieser konstruktive Ansatz für eine Schaltgasse und einen Fangzahn an einem Übergangkettenrad mit einem Außenlaschen-Aufstieg mit nachfolgender Innenlaschenpassage gemäß Figur 14 genutzt werden.

Die vorliegende Erfindung zeigt, wie einzelne Kettenräder einer Mehrfachkettenradanordnung ausgebildet werden können, damit einerseits eine Verlagerung der Kette bei einem Gangwechsel durch entsprechende Schaltgassen sowohl von einem kleineren Kettenrad auf ein größeres Kettenrad als auch in umgekehrter Richtung von einem größeren Kettenrad auf ein kleineres Kettenrad zuverlässig und schnell erfolgen kann, und dabei auch gewährleistet ist, dass die Kette sicher auf dem Kettenrad geführt ist.

## Patentansprüche

1. Mehrfach-Kettenradanordnung (1) für eine Hinterradnabe eines Fahrrades, die eine Vielzahl an Kettenrädern (12, 13, 14) mit unterschiedlichen Durchmessern umfasst, wobei wenigstens eines der Kettenräder jeweils eine Mehrzahl (Z) von Zähnen (2) aufweist, die mit einer aus Innenlaschengliedern (6) und Außenlaschengliedern (7) bestehenden Kette (5) in Eingriff bringbar sind, wobei am Umfang dieses Kettenrads (12, 13, 14) in Umfangsrichtung betrachtet wenigstens eine Folge von Zähnen (21,22) vorgesehen ist, bei der nacheinander hinsichtlich ihrer Materialstärke auf einen dünnen Zahn (22) ein dicker Zahn (21) und darauf folgend wiederum ein dünner Zahn (22) angeordnet sind, und wobei an diesem Kettenrad wenigstens eine Einprägung (39) und/oder eine Passageausnehmung (32) vorgesehen Ist, die wenigstens eine Schaltgasse bilden und einen Wechsel der Kette (5) zwischen zwei benachbarten Kettenrädern (12, 13,14) ermöglichen, **dadurch gekennzeichnet, dass**
die Materialstärke des dicken Zahns (21) quer zur Umfangsrichtung betrachtet, weiter als der Ketteninnenlaschenabstand ist.

2. Mehrfach-Kettenradanordnung (1) nach Anspruch 1,
wobei sich die Folge von Zähnen bestehend aus einem dünnen Zahn (22), einem darauf folgenden dicken Zahn (21) und einem darauf folgenden dünnen Zahn (22) entlang der Umfangsrichtung des wenigstens eines Kettenrades zweifach, mehrfach oder kontinuierlich wiederholt.

3. Mehrfach-Kettenradanordnung (1) nach einem der vorangehenden Ansprüche, wobei jeweils die Oberflächen zumindest eines Teils der, vorzugsweise aller, Zähne (2) wenigstens eines der Kettenräder (12, 13, 14) auf einer zu einem benachbarten Kettenrad (12, 13, 14) mit kleinerem Durchmesser weisenden Seite im Wesentlichen in einer gemeinsamen Ebene liegen, wobei die einzelnen Zähne (21, 22), die eine Einprägung (39) oder eine Passageausnehmung (32) aufweisen, hiervon ausgenommen sind.

4. Mehrfach-Kettenradanordnung (1) nach einem der vorangehenden Ansprüche,
wobei die Einprägung (39) und/oder Passageausnehmung (32) an wenigstens einem der Zähne (2) eines der Kettenräder (13, 14) mit größerem Durchmesser, der einen Passagezahn (26) bildet, zur Passage einer Innenlasche (61) der Kette (5) zum Abstieg der Kette (5) auf ein benachbartes Kettenrad (12, 13) mit kleinerem Durchmesser vorgesehen ist.

5. Mehrfach-Kettenradanordnung (1) nach einem der vorangehenden Ansprüche,
wobei wenigstens ein Kettenrad (12, 13, 14) mit kleinerem Durchmesser gegenüber einem benachbarten Kettenrad (12, 13, 14) mit größerem Durchmesser phasenmäßig derart ausgerichtet Ist, dass bei einem Wechsel der Kette (5) von dem Kettenrad mit größerem Durchmesser auf das Kettenrad mit kleinerem Durchmesser eine Synchronität zwischen den Zähnen (21, 22) des Kettenrads (12, 13, 14) mit kleinerem Durchmesser und jeweils zugehörigen Kettengliedern der Kette (5) erreicht wird.

6. Mehrfach-Kettenradanordnung (1) nach einem der vorangehenden Ansprüche,
wobei wenigstens ein Kettenrad (12, 13, 14) mit kleinerem Durchmesser gegenüber einem benachbarten Kettenrad (12, 13, 14) mit größerem Durchmesser phasenmäßig derart ausgerichtet Ist, dass bei einem Wechsel der Kette (5) von dem Kettenrad mit kleinerem Durchmesser auf das Kettenrad mit größerem Durchmesser eine Synchronität zwischen den Zähnen (21, 22) des Kettenrads (12, 13, 14) mit größerem Durchmesser und jeweils zugehörigen Kettengliedern der Kette (5) erreicht wird.

7. Mehrfach-Kettenradanordnung (1) nach einem der vorangehenden Ansprüche,
wobei die Mehrfach-Kettenradanordnung (1) wenigstens ein weiteres Kettenrad umfasst, das in Richtung quer zur Umfangsrichtung betrachtet hinsichtlich der Materialstärke im Wesentlichen gleich dicke Zähne aufweist, und das benachbart zu dem wenigstens einen Kettenrad mit dicken und dünnen Zähnen angeordnet ist.

8. Mehrfach-Kettenradanordnung (1) nach einem der vorangehenden Ansprüche,
wobei wenigstens ein Übergangsritzel vorgesehen ist, das keinen dickeren Zahn enthält.

9. Mehrfach-Kettenradanordnung (1) nach Anspruch 7,
wobei das wenigstens eine Übergangsritzel eine ungerade Anzahl von Zähnen aufweist.

10. Mehrfach-Kettenradanordnung (1) nach einem der vorangehenden Ansprüche,
wobei das wenigstens eine Kettenrad (12, 13, 14) mit kleinerem Durchmesser in Richtung quer zur Umfangsrichtung betrachtet hinsichtlich ihrer Materialstärke dicke Zähne (21) und dünne Zähne (22) aufweist.

11. Mehrfach-Kettenradanordnung (1) nach einem der vorangehenden Ansprüche,
wobei wenigstens einer der Zähne (2) eine Abstützkante (37) aufweist, die dazu ausgebildet ist, eine Innenlasche (61) oder eine Außenlasche (71) der Kette (5) in Bezug auf die Drehachse des zugehörigen Kettenrads (12, 13, 14) radial nach innen abzustützen.

12. Mehrfach-Kettenradanordnung (1) nach einem der vorangehenden Ansprüche,
wobei die wenigstens eine Einprägung (39) eine Abgleitschräge aufweist, die eine Aufnahme einer nicht vorgesehenen Lasche der Kette (5) verhindert.

13. Mehrfach-Kettenradanordnung (1) nach einem der vorangehenden Ansprüche,
wobei die Zähne (21, 22) benachbarter Kettenräder (12, 13, 14) an den Enden der Schaltgasse um die Drehachse der Kettenräder (12,13,14) aufeinander zu gedreht sind.

14. Mehrfach-Kettenradanordnung (1) nach einem der vorangehenden Ansprüche,
wobei ein Ritzel mit einem dicken Zahn, das benachbart zu einem durchmesserkleineren Übergangsritzel ohne einen dicken Zahn angeordnet ist, Schalteinprägungen oder Passageausnehmungen aufweist, die geeignet sind, an einer definierten Position einen Außenlaschenaufstieg zu ermöglichen und einen Innenlaschenaufstieg zu verhindern.

15. Mehrfach-Kettenradanordnung (1) nach einem der vorangehenden Ansprüche,
wobei ein Ritzel mit einem dicken Zahn, das benachbart zu einem durchmesserkleinen Übergangsritzel ohne einen dicken Zahn angeordnet Ist, Schalteinprägungen oder Passageausnehmungen aufweist, die geeignet sind an einer definierten Position einen Innenlaschenaufstieg zu ermöglichen und einen Außenlaschenaufstieg zu verhindern.

16. Mehrfach-Kettenradanordnung (1) nach einem der vorangehenden Ansprüche,
wobei an wenigstens einem Kettenrad mit kleinerem Durchmesser wenigstens ein hinsichtlich seiner Materialstärke dicker Zahn vorgesehen ist, der derart ausgebildet ist, dass er aufgrund seiner materialstärkebedingt größeren axialen Erstreckung ein Eingleiten einer Ketteninnenlasche verhindert.

## Claims

1. Multi-sprocket arrangement (1) for a rear wheel hub of a bicycle, which multi-sprocket arrangement comprises a multiplicity of sprockets (12, 13, 14) of different diameters, wherein at least one of the sprockets has in each case a multiplicity (Z) of teeth (2), which can be brought into engagement with a chain (5) composed of inner link elements (6) and outer link elements (7), wherein, on the circumference of said sprocket (12, 13, 14), as viewed in a circumferential direction, at least one sequence of teeth (21, 22) is provided in which, with regard to their material thickness, a thin tooth (22) followed by a thick tooth (21) followed in turn by a thin tooth (22) are arranged in series, and wherein, on said sprocket, there is provided at least one impression (39) and/or a passage recess (32) which form at least one gearshift channel and permit a changeover of the chain (5) between two adjacent sprockets (12, 13, 14), **characterized in that**
the material thickness of the thick tooth (21) as viewed perpendicular to the circumferential direction is wider than the internal chain link spacing.

2. Multi-sprocket arrangement (1) according to Claim 1,
wherein the sequence of teeth composed of a thin tooth (22) followed by a thick tooth (21) followed by a thin tooth (22) is repeated two times, several times or continuously along the circumferential direction of the at least one sprocket.

3. Multi-sprocket arrangement (1) according to one of the preceding claims, wherein, in each case, the surfaces of at least some, preferably all, of the teeth (2) of at least one of the sprockets (12, 13, 14) on a side pointing toward an adjacent sprocket (12, 13, 14) of relatively small diameter lie substantially in a common plane, wherein the individual teeth (21, 22) which have an impression (39) or a passage recess (32) are set back in relation to said plane.

4. Multi-sprocket arrangement (1) according to one of the preceding claims,
wherein the impression (39) and/or passage recess (32) on at least one of the teeth (2) of one of the sprockets (13, 14) of relatively large diameter, said tooth forming a passage tooth (26), is provided for the passage of an inner link (61) of the chain (5) in order for the chain (5) to descend onto an adjacent sprocket (12, 13) of relatively small diameter.

5. Multi-sprocket arrangement (1) according to one of the preceding claims,
wherein at least one sprocket (12, 13, 14) of relatively small diameter is oriented, in terms of phase, with respect to an adjacent sprocket (12, 13, 14) of relatively large diameter such that, during a changeover of the chain (5) from the sprocket of relatively large diameter to the sprocket of relatively small diameter, synchronicity between the teeth (21, 22) of the sprocket (12, 13, 14) of relatively small diameter and respectively associated chain elements of the chain (5) is realized.

6. Multi-sprocket arrangement (1) according to one of the preceding claims,
wherein at least one sprocket (12, 13, 14) of relatively small diameter is oriented, in terms of phase, with respect to an adjacent sprocket (12, 13, 14) of relatively large diameter such that, during a changeover of the chain (5) from the sprocket of relatively small diameter to the sprocket of relatively large diameter, synchronicity between the teeth (21, 22) of the sprocket (12, 13, 14) of relatively large diameter and respectively associated chain elements of the chain (5) is realized.

7. Multi-sprocket arrangement (1) according to one of the preceding claims,
wherein the multi-sprocket arrangement (1) comprises at least one further sprocket which, as viewed in a direction perpendicular to the circumferential direction, has teeth of substantially identical thickness with regard to material thickness, and which is arranged adjacent to the at least one sprocket with thick and thin teeth.

8. Multi-sprocket arrangement (1) according to one of the preceding claims,
wherein at least one transition pinion is provided which does not comprise any relatively thick teeth.

9. Multi-sprocket arrangement (1) according to Claim 7,
wherein the at least one transition pinion has an odd number of teeth.

10. Multi-sprocket arrangement (1) according to one of the preceding claims,
wherein the at least one sprocket (12, 13, 14) of relatively small diameter has, as viewed in a direction perpendicular to the circumferential direction, thick teeth (21) and thin teeth (22) with regard to material thickness.

11. Multi-sprocket arrangement (1) according to one.of the preceding claims,
wherein at least one of the teeth (2) has a support edge (37) which is designed to support an inner link (61) or an outer link (71) of the chain (5) in a radially inward direction with respect to the axis of rotation of the associated sprocket (12, 13, 14).

12. Multi-sprocket arrangement (1) according to one of the preceding claims,
wherein the at least one impression (39) has a slide-off bevel which prevents an unintended link of the chain (5) from being received therein.

13. Multi-sprocket arrangement (1) according to one of the preceding claims,
wherein the teeth (21, 22) of adjacent sprockets (12, 13, 14) at the ends of the gearshift channel are turned toward one another about the axis of rotation of the sprockets (12, 13, 14).

14. Multi-sprocket arrangement (1) according to one of the preceding claims,
wherein a pinion with a thick tooth, which is arranged adjacent to a transition pinion of relatively small diameter and without a thick tooth, has gearshift impressions or passage recesses which are suitable for allowing an outer link to ascend, and preventing an inner link from ascending, at a defined position.

15. Multi-sprocket arrangement (1) according to one of the preceding claims,
wherein a pinion with a thick tooth, which is arranged adjacent to a transition pinion of small diameter and without a thick tooth, has gearshift impressions or passage recesses which are suitable for allowing an inner link to ascend, and preventing an outer link from ascending, at a defined position.

16. Multi-sprocket arrangement (1) according to one of the preceding claims,
wherein, on at least one sprocket of relatively small diameter, at least one thick tooth with regard to material thickness is provided, which is designed in such a way that said tooth, owing to its relatively large axial extent due to material thickness, prevents a chain inner link from sliding in.

## Revendications

1. Agencement de roues d'entraînement multiples (1) pour un moyeu de roue arrière d'un vélo, lequel agencement comporte une pluralité de roues d'entraînement (12, 13, 14) de diamètres différents, dans lequel au moins l'une des roues d'entraînement comprend respectivement une pluralité (Z) de dents (2) qui peuvent être amenées en prise avec une chaîne (5) constituée d'éléments maillons intérieurs (6) et d'éléments maillons extérieurs (7), dans lequel au moins une succession de dents (21, 22) est prévue à la périphérie de cette roue d'entraînement (12, 13, 14), considérée dans la direction périphérique, succession dans laquelle sont disposées les unes après les autres, en termes de leur épaisseur de matériau, une dent mince (22) suivie par une dent épaisse (21) suivie à nouveau par une dent mince (22), et dans lequel au moins une empreinte (39) et/ou un évidement de passage (32) sont prévus sur cette roue d'entraînement, lesquels forment au moins une voie de changement de vitesses et permettent une commutation de la chaîne (5) entre ces roues d'entraînement adjacentes (12, 13, 14), **caractérisé en ce que**
l'épaisseur de matériau de la dent épaisse (21) est, considérée transversalement à la direction périphérique, plus large que l'espacement des éléments maillons intérieurs de chaîne.

2. Agencement de roues d'entraînement multiples (1) selon la revendication 1,
dans lequel la succession de dents constituée d'une dent mince (22), d'une dent épaisse (21) suivant celle-ci et d'une dent mince (22) suivant celle-ci le long de la direction périphérique de l'au moins une roue d'entraînement est répétée deux fois, plusieurs fois ou de manière continue.

3. Agencement de roues d'entraînement multiples (1) selon l'une des revendications précédentes,
dans lequel respectivement les surfaces d'au moins une partie des dents, de préférence de toutes les dents (2), d'au moins l'une des roues d'entraînement (12, 13, 14) se situent sensiblement dans un plan commun sur un côté orienté vers une roue d'entraînement adjacente (12, 13, 14) de plus petit diamètre, dans lequel les dents individuelles (21, 22) qui comprennent une empreinte (39) ou un évidement de passage (32) sont en retrait par rapport à ce plan.

4. Agencement de roues d'entraînement multiples (1) selon l'une des revendications précédentes,
dans lequel l'empreinte (39) et/ou l'évidement de passage (32) sont prévus sur au moins l'une des dents (2) de l'une des roues d'entraînement (13, 14) de plus grand diamètre, laquelle dent forme une dent de passage (26) pour le passage d'un maillon intérieur (61) de la chaîne (5) pour la descente de la chaîne (5) sur une roue d'entraînement adjacente (12, 13) de plus petit diamètre.

5. Agencement de roues d'entraînement multiples (1) selon l'une des revendications précédentes,
dans lequel au moins une roue d'entraînement (12, 13, 14) de plus petit diamètre est orientée, en termes de phase, par rapport à une roue d'entraînement adjacente (12, 13, 14) de plus grand diamètre de telle sorte que lors d'un passage de la chaîne (5) de la roue d'entraînement de plus grand diamètre à la roue d'entraînement de plus petit diamètre, une synchronicité entre les dents (21, 22) de la roue d'entraînement (12, 13, 14) de plus petit diamètre et des éléments de chaîne respectivement associés de la chaîne (5) est obtenue.

6. Agencement de roues d'entraînement multiples (1) selon l'une des revendications précédentes,
dans lequel au moins une roue d'entraînement (12, 13, 14) de plus petit diamètre est orientée, en termes de phase, par rapport à une roue d'entraînement adjacente (12, 13, 14) de plus grand diamètre de telle sorte que lors d'un passage de la chaîne (5) de la roue d'entraînement de plus petit diamètre à la roue d'entraînement de plus grand diamètre, une synchronicité entre les dents (21, 22) de la roue d'entraînement (12, 13, 14) de grand petit diamètre et des éléments de chaîne respectivement associés de la chaîne (5) est obtenue.

7. Agencement de roues d'entraînement multiples (1) selon l'une des revendications précédentes,
l'agencement de roues d'entraînement multiples (1) comportant au moins une autre roue d'entraînement qui comprend, considérée dans la direction transversale à la direction périphérique, en termes d'épaisseur de matériau, des dents sensiblement de même épaisseur, et qui est disposée de manière adjacente à l'au moins une roue d'entraînement dotée de dents épaisses et minces.

8. Agencement de roues d'entraînement multiples (1) selon l'une des revendications précédentes,
dans lequel au moins un pignon de transition est prévu, lequel ne contient aucune dent plus épaisse.

9. Agencement de roues d'entraînement multiples (1) selon la revendication 7,
dans lequel l'au moins un pignon de transition comprend un nombre impair de dents.

10. Agencement de roues d'entraînement multiples (1) selon l'une des revendications précédentes,
dans lequel l'au moins une roue d'entraînement (12, 13, 14) de plus petit diamètre comprend, considérée dans la direction transversale à la direction périphérique, en termes de son épaisseur de matériau, des dents épaisses (21) et des dents minces (22).

11. Agencement de roues d'entraînement multiples (1) selon l'une des revendications précédentes,
dans lequel au moins l'une des dents (2) comprend un bord de support (37) qui est conçu pour supporter un maillon intérieur (61) ou un maillon extérieur (71) de la chaîne (5) radialement vers l'intérieur par rapport à l'axe de rotation de la roue d'entraînement associée (12, 13, 14).

12. Agencement de roues d'entraînement multiples (1) selon l'une des revendications précédentes,
dans lequel l'au moins une empreinte (39) comprend un biseau de glissement qui empêche une réception d'un maillon non prévu de la chaîne (5).

13. Agencement de roues d'entraînement multiples (1) selon l'une des revendications précédentes,
dans lequel les dents (21, 22) de roues d'entraînement adjacentes (12, 13, 14) aux extrémités de la voie de changement de vitesses sont tournées les unes vers les autres autour de l'axe de rotation des roues d'entraînement (12, 13, 14).

14. Agencement de roues d'entraînement multiples (1) selon l'une des revendications précédentes,
dans lequel un pignon doté d'une dent épaisse qui est disposé de manière adjacente à un pignon de transition de plus petit diamètre et sans dent épaisse comprend des empreintes de changement de vitesses ou des évidements de passage qui sont appropriés pour permettre une montée de maillon extérieur et pour empêcher une montée de maillon intérieur, à une position définie.

15. Agencement de roues d'entraînement multiples (1) selon l'une des revendications précédentes,
dans lequel un pignon doté d'une dent épaisse qui est disposé de manière adjacente à un pignon de transition de plus petit diamètre et sans dent épaisse comprend des empreintes de changement de vitesses ou des évidements de passage qui sont appropriés pour permettre une montée de maillon intérieur et pour empêcher une montée de maillon extérieur, à une position définie.

16. Agencement de roues d'entraînement multiples (1) selon l'une des revendications précédentes,
dans lequel sur au moins une roue d'entraînement de plus petit diamètre il est prévu au moins une dent épaisse en termes de son épaisseur de matériau, laquelle dent est conçue de telle sorte qu'elle empêche un glissement d'un maillon intérieur de chaîne à l'intérieur en raison de son étendue axiale plus grande due à l'épaisseur de matériau.
